(19) Europäisches Patentamt
European Patent Office
Office européen des brevets

(11) Veröffentlichungsnummer: **0 238 920 B1**

# (12) EUROPÄISCHE PATENTSCHRIFT

(45) Veröffentlichungstag der Patentschrift: **03.07.91**

(51) Int. Cl.$^5$: **C09D 5/44**, C08G 59/68

(21) Anmeldenummer: **87103307.2**

(22) Anmeldetag: **07.03.87**

Verbunden mit 87901476.9/0298968
(europäische
Anmeldenummer/Veröffentlichungsnummer)
durch Entscheidung vom 21.09.90.

## (54) Wässrige Elektrotauchlackbäder für die kathodische Elektrotauchlackierung und Verfahren zu ihrer Herstellung.

(30) Priorität: **26.03.86 DE 3610183**

(43) Veröffentlichungstag der Anmeldung:
**30.09.87 Patentblatt 87/40**

(45) Bekanntmachung des Hinweises auf die Patenterteilung:
**03.07.91 Patentblatt 91/27**

(84) Benannte Vertragsstaaten:
**AT BE CH DE ES FR GB IT LI NL SE**

(56) Entgegenhaltungen:
**EP-A- 0 074 634**
**WO-A-86/00627**
**US-A- 4 476 263**
**US-A- 4 624 975**

(73) Patentinhaber: **BASF Lacke + Farben Aktiengesellschaft**
**Max-Winkelmann-Strasse 80**
**W-4400 Münster(DE)**

(72) Erfinder: **Schön, Georg, Dr.**
**Schillerstrasse 2**
**W-4416 Everswinkel(DE)**
Erfinder: **Ott, Günter, Dr.**
**Von-Holte-Strasse 101 a**
**W-4400 Münster(DE)**
Erfinder: **Geist, Michael, Dr.**
**Rubensstrasse 251**
**W-4400 Münster(DE)**

EP 0 238 920 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wäßrige Elektrotauchlackbäder für die kathodische Elektrotauchlackierung, die als kathodisch abscheidbare Bindemittel modifizierte Epoxid-Aminaddukte enthalten und hergestellt worden sind, indem

(1)

(A) Polyepoxide und

(B) Verbindungen, die eine oder mehrere, bevorzugt 2, an aromatische und/oder (cyclo)aliphatische Molekülfragmente gebundene Hydroxylgruppen pro Molekül enthalten,

in Anwesenheit von aminbasischen Katalysatoren zu epoxidgruppenhaltigen Zwischenprodukten umgesetzt worden sind und

(2) diese Zwischenprodukte anschließend ggf. mit weiteren üblichen Modifizierungsmitteln und schließlich mit

(C) primären und/oder sekundären (Poly)aminen bzw. deren Salzen und/oder Salzen von tertiären Aminen

umgesetzt, die so erhaltenen Reaktionsprodukte ggf. mit Säuren neutralisiert, in einem wäßrigen Medium dispergiert und diese Dispersionen nach gut bekannten Methoden zur Elektrotauchlackbädern weiterverarbeitet worden sind.

Die kationische Elektrotauchlackierung ist ein vor allem zum Grundieren häufig angewandtes Lackierverfahren, bei dem wasserverdünnbare, kationische Gruppen tragende Kunstharze mit Hilfe von Gleichstrom auf elektrisch leitende Körper aufgebracht werden.

Elektrotauchlackbäder des oben beschriebenen Typs sind z.B. in folgenden Patentdokumenten offenbart: US-PS-3,799,854, US-PS-3,984,299, US-PS-4,031,050, US-PS-4,252,703, US-PS-4,332,711 und DE-PS-3108073.

Es ist bekannt, daß mit Lacksystemen dieser Art qualitativ hervorragende Lackierungen erzielt werden können.

Leider enthalten die in Rede stehenden Elektrotauchlackbäder unerwünschterweise auch Chloridionen, die, wenn sie einen von mehreren Parametern abhängigen (z.B. pH-Wert des Elektrotauchlackbades) Konzentrationsgrenzwert überschreiten, eine Korrosion der Elektrotauchanlagen, insbesondere der Anoden (z.B. Lochfraßkorrosion an Edelstahlelektroden) verursachen.

Die störenden Chloridionen stammen in der Hauptsache aus den zur Synthese der Bindemittel als Komponente (A) eingesetzten, mit chlorhaltigen Nebenprodukten verunreinigten Polyepoxiden.

Diese Nebenprodukte können z.B. folgende Strukturelemente enthalten:

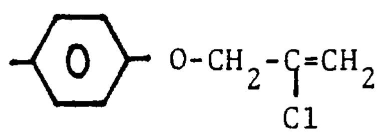

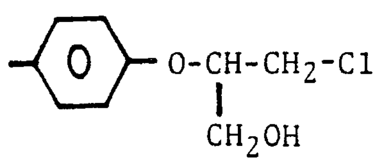

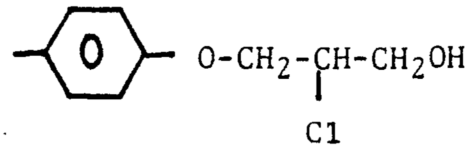

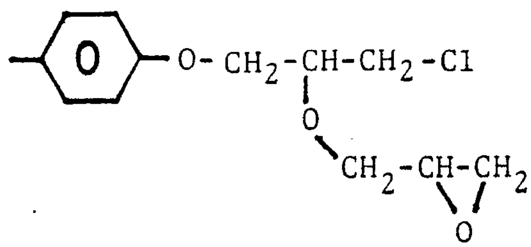

Der Chlorgehalt handelsüblicher Polyepoxide liegt aufgrund der Anwesentheit solcher Nebenprodukte zwischen 0,15 und 0,5 %.

In der DE-AS-2751498 wird beschrieben, daß die Zugabe von Nitrat- und/oder Nitritionen in das Elektrotauchlackbad eine Verminderung der durch die Anwesenheit der Chloridionen verursachten Korrosionsschäden zur Folge hat.

Dieses Verfahren wird ebenso wie eine Reinigung der mit chlorhaltigen Nebenprodukten verunreinigten Polyepoxide bzw. Entfernung der Chloridionen aus dem fertigen wäßrigen Elektrotauchlack mit Hilfe bekannter Trennverfahren in der Praxis aufgrund wirtschaftlicher und/oder technischer Schwierigkeiten nicht durchgeführt.

Die der vorliegenden Erfindung zugrundeliegende Aufgabenstellung besteht darin, Elektrotauchlackbäder des eingangs beschriebenen Typs bereitzustellen, die gegenüber den im Stand der Technik bekannten Bädern geringere Chloridionenkonzentrationen aufweisen.

Diese Aufgabe kann überraschenderweise gelöst werden, indem Elektrotauchlackbäder der oben beschriebenen Art bereitgestellt werden, die dadurch gekennzeichnet sind, daß der die Reaktion zwischen den Komponenten (A) und (B) katalysierende aminbasische Katalysator vor der weiteren Umsetzung der aus den Komponenten (A) und (B) gebildeten Zwischenprodukte mit einer Brönstedsäure, deren bei 20° C gemessener $pK_s$-Wert der ersten Dissoziationsstufe unter 3,7, bevorzugt unter 3,5 liegt, neutralisiert worden ist.

Die Erfindung betrifft auch ein Verfahren zur Herstellung wäßriger Elektrotauchlackbäder für die kathodische Elektrotauchlackierung, bei dem

(1)

(A) Polyepoxide und

(B) Verbindungen, die eine oder mehrere, bevorzugt 2, an aromatische und/oder (cyclo)aliphatische Molekülfragmente gebundene Hydroxylgruppen pro Molekül enthalten,

in Anwensenheit von aminbasischen Katalysatoren zu epoxidgruppenhaltigen Zwischenprodukten umgesetzt werden und

(2) diese Zwischenprodukte anschließend ggf. mit weiteren üblichin Modifizierungsmitteln und schließlich mit

(C) primären und/oder sekundären (Poly)aminen bzw. deren Salzen und/oder Salzen von tertiären Aminen

umgesetzt, die so erhaltenen Reaktionsprodukte ggf. mit Säuren neutralisiert, in einem wäßrigen Medium dispergiert und diese Dispersionen nach gut bekannten Methoden zu Elektrotauchlackbädern weiterverarbeitet werden, das dadurch gekennzeichnet ist, daß der die Reaktion zwischen den Komponenten (A) und (B) katalysierende aminbasische Katalysator vor der weiteren Umsetzung der aus den Komponenten

(A) und (B) gebildeten Zwischenprodukte mit einer Brönstedsäure, deren bei 20 °C gemessener $pK_s$-Wert der ersten Dissoziationsstufe unter 3,7, bevorzugt unter 3,5 liegt, neutralisiert wird.

Zur Herstellung der erfindungsgemäßen Elektrotauchlackbäder wird das kathodisch abscheidbare Bindemittel nach gut bekannten Methoden in einem vorwiegend aus organischen Lösungsmitteln bestehenden Reaktionsmedium synthetisiert.

Dabei werden zunächst einmal aus den Komponenten (A) und (B) unter aminbasischer Katalyse epoxidgruppenhaltige Zwischenprodukte hergestellt.

Als Komponente (A) können alle Verbindungen eingesetzt werden, deren Moleküle im Durchschnitt mehr als 1 Epoxidgruppe enthalten. Bevorzugt sind solche Verbindungen, die 2 Epoxidgruppen im Molekül enthalten und ein relativ niedriges Molekulargewicht von höchstens 750, bevorzugt 400-500, haben.

Besonders bevorzugte Epoxidverbindungen sind aus Polyphenolen und Epihalohydrinen hergestellte Polyglycidylether von Polyphenolen. Als Polyphenol kann bevorzugt Bisphenol A eingesetzt werden.

Es können auch Polyglycidylester von Polycarbonsäuren eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten alicyclischen Verbindung erhält.

Als Komponente (B) werden Verbindungen eingesetzt, die eine oder mehrere, bevorzugt 2, an aromatische und/oder (cyclo)aliphatische Molekülfragmente gebundene Hydroxylgruppen pro Molekül enthalten.

Die als Komponente (B) in Betracht kommenden Verbindungen schließen sowohl nieder- als auch hochmolekulare Verbindungen ein.

Geeignete niedermolekulare (B)-Komponenten bestehen aus phenolischen, aliphatischen und/oder alicyclischen polyfunktionellen Alkoholen mit einem Molekulargewicht unter 350.

Als Beispiele seien genannt:

Diole, wie Ethylenglykol, Dipropylenglykol, Triglykol, 1,2-Propandiol, 1,3-Propandiol, 2,2-Dimethyl-1,3-propandiol, 2-Methyl-2-propyl-1,3-propandiol, 1,2-Butandiol, 1,4-Butandiol, 2-Ethyl-1,4-butandiol, Buten-2-diol-1,4, 1,2-Pentandiol, 1,5-Pentandiol, 3-Methyl-1,5-pentandiol, 1,6-Hexandiol, 2-Hydroxyethylhydroxyacetat, 2,2-Dimethyl-3-hydroxypropyl-2,2-dimethylhydroxypropionat, 4,4'Methylen-biscyclohexanol und 4,4'-Isopropylidenbiscyclohexanol. Einige bevorzugte Diole sind 2,2-Dimethyl-1,3-propandiol und 3-Methyl-1,5-pentandiol.

Beispiele für höhermolekulare (B)-Komponenten sind Polyesterpolyole, Polyetherpolyole oder Polycaprolactonpolyole verschiedener Funktionalität und Molekulargewichte.

Für die Komponente (B) geeignete Polyalkylenetherpolyole entsprechen der allgemeinen Formel:

$$H-\left[O-(CHR)_n\right]_m-OH$$

in der R = Wasserstoff oder ein niedriger Alkylrest, ggf. mit verschiedenen Substituenten, ist, n = 2-6 und m = 3-50 oder noch höher ist. Beispiele sind Poly(oxytetramethylen)glykole und Poly(oxyethylen)glykole.

Die bevorzugten Polyalkylenetherpolyole sind Poly(oxytetramethylen)glykole mit einem Molekulargewicht im Bereich von 350-1000.

Polyesterpolyole können ebenfalls als (B)-Komponenten verwendet werden. Man kann die Polyesterpolyole durch Polyveresterung von organischen Polycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2-18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure und Glutarsäure. Anstelle dieser Säuren können auch ihre Anhydride, soweit diese existieren, verwendet werden.

Ferner lassen sich auch Polyesterpolyole, die sich von Lactonen ableiten, als Komponente (B) benutzen. Diese Produkte erhält man durch die Umsetzung eines $\epsilon$-Caprolactons mit einem Polyol. Solche

Produkte sind in der US-PS-3,169,945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$- \overset{O}{\overset{\|}{C}} - (CHR)_n - CH_2O -$$

entsprechen, in der n mindestens 4, bevorzugt 4-6, ist und der Substituent Wasserstoff, ein Alkylrest, ein Cycloalkylrest oder ein Alkoxyrest ist.

Als aminbasische Katalysatoren können prinzipiell alle ein oder mehrere basische Stickstoffatome enthaltenden Verbindungen eingesetzt werden.

Bevorzugterweise werden tertiäre Amine, wie z.B. N,N-Dimethylbenzylamin, Tributylamin, Dimethylcyclohexylamin und Dimethyl-$C_{12}$/$C_{14}$-amin ($C_{12}$/$C_{14}$ steht für eine 12-14 C Atome enthaltende aliphatische Kette) verwendet.

Der aminbasische Katalysator wird in der Regel in einer Menge von 0,1-2 Gew.%, bezogen auf das aus den Komponenten (A) und (B) entstehende Zwischenprodukt, eingesetzt.

Bei dem erfindungsgemäßen Verfahren zur Herstellung der erfindungsgemäßen Elektrotauchlackbäder wird - im Gegensatz zum Stand der Technik - der die Umsetzung der Komponenten (A) und (B) katalysierende aminbasische Katalysator vor der weiteren Umsetzung der aus den Komponenten (A) und (B) gebildeten Zwischenprodukte mit einer Bronstedsäure neutralisiert.

Die Neutralisierung des aminbasischen Katalysators kann vor der Umsetzung der Komponenten (A) und (B) oder im Verlauf der Umsetzung zwischen den Komponenten (A) und (B) erfolgen.

In einer Ausführungsform der Erfindung wird der aminbasische Katalysator innerhalb des Zeitintervalls zwischen dem Einsetzen der Reaktion zwischen den Komponenten (A) und (B) und dem Abschluß der Reaktion zwischen den Komponenten (A) und (B) vor der weiteren Umsetzung der aus den Komponenten (A) und (B) gebildeten epoxidgruppenhaltigen Zwischenprodukte durch Zugabe einer ausreichenden Menge einer geeigneten Brönstedsäure neutralisiert. Dadurch werden Chloridionenkonzentrationen erreicht, die unter den in vergleichbaren nicht erfindungsgemäßen Elektrotauchlackbädern anzutreffenden Chloridionenkonzentrationen liegen.

Eine besonders bevorzugte Ausführungsform der Erfindung besteht darin, daß der der aminbasische Katalysator bereits vor der Reaktion der Komponenten (A) und (B) neutralisiert worden ist, d.h. die Umsetzung zwischen den Komponenten (A) und (B) wird mit einem Salz aus der zur Neutralisation verwendeten Brönstedsäure und dem aminbasischen Katalysator katalysiert. Diese Verfahrensweise liefert besonders niedrige Chloridionengehalte.

Die oben beschriebenen Maßnahmen haben zur Folge, daß die nach dem erfindungsgemäßen Verfahren hergestellten Elektrotauchlackbäder einen Chloridionengehalt aufweisen, der deutlich unter dem leigt, der in vergleichbaren Elektrotauchlackbädern gefunden wird, bei deren Herstellung die erfindungsgemäße Maßnahme nicht durchgeführt worden ist.

Es ist überraschend und war in keiner Weise vorhersehbar, daß mit Hilfe der erfindungsgemäßen Maßnahmen Elektrotauchlackbäder mit einem verminderten Chloridionengehalt herstellbar sind.

Unter Brönstedsäuren werden Substanzen verstanden, die Protonen abgeben können.

Bei der Auswahl der zur Neutralisierung des die Umsetzung zwischen den Komponenten (A) und (B) katalysierenden aminbasischen Katalaysators einzusetzenden Brönstedsäure ist darauf zu achten, daß das Ausmaß der Chloridionenkonzentrationsabsenkung auch von der Stärke der verwendeten Säure abhängig ist.

Der bei 20 °C gemessene $pK_s$-Wert der ersten Dissoziationsstufe der eingesetzten Säuren sollte unter 3,7, bevorzugt unter 3,5, ganz besonders bevorzugt unter 3,1 liegen. (Zur Definition des $pK_s$-Wertes vgl. z.B. Organikum, VEB Deutscher Verlag der Wissenschaften, Berlin 1974, Seite 150 f.)

Als Beispiele für geeignete Brönstedsäuren seien Benzolsulfonsäure, p-Toluolsulfonsäure, o-Nitrobenzoesäure, Salicylsäure und Phosphorsäure genannt.

Ganz besonders niedrige Chloridionenkonzentrationen können bei Verwendung von Salicylsäure erreicht werden.

Bevorzugt werden 1,0-1,5 Äquivalente Säure auf 1 Äquivalent basischen Stickstoff eingesetzt.

Die Reaktion zwischen den Komponenten (A) und (B) wird bei Temperaturen zwischen 100 und 190 °C, vorzugsweise zwischen 115 und 185 °C, durchgeführt.

Die aus den Komponenten (A) und (B) entstandenen epoxidgruppenhaltigen Zwischenprodukte werden nach erfolgter Neutralisierung des aminbasischen Katalysators ggf. mit weiteren üblichen, keine aminbasische Katalyse erfordernden, Modifizierungsmitteln und anschließend mit der Komponente (C) umgesetzt.

Als Komponente (C) können primäre und/oder sekundäre Amine bzw. deren Salze und/oder Salze von tertiären Aminen verwendet werden, wobei die sekundären Amine besonders bevorzugte Komponenten (C) sind.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin udgl. Geeignet sind ebenfalls Alkanolamine wie z.B. Methylethanolamin, Diethanolamin udgl. Ferner sind Dialkylaminoalkylamine wie z.B. Dimethylaminoethylamin, Diethylaminopropylamin, Dimethylaminopropylamin udgl. geeignet. In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die für die Wasserverdünnbarkeit und elektrische Abscheidung erforderlichen Ladungen können durch Protonisierung mit wasserlöslichen Säuren (z.B. Ameisensäure, Milchsäure, Propionsäure) oder auch durch Umsetzung der Oxirangruppen mit Salzen eines Amins erzeugt werden.

Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Triisopropylamin udgl. Beispiel von anderen geeigneten Aminen sind in der US-PS-3,839,252 in Spalte 5, Zeile 3, bis Spalte 7, Zeile 42, angegeben.

Die Reaktion zwischen Aminen und epoxidgruppenhaltigen Verbindungen springt häufig schon bei Vermischen der Reaktionspartner an. Je nach gewünschtem Reaktionsverlauf - vor allem zur Vervollständigung der Umsetzung - ist es empfehlenswert, die Reaktionstemperatur auf 50-150 °C zu erhöhen.

Die nach dem oben ausführlich beschriebenen Verfahren hergestellten Bindemittel werden nach gut bekannten Methoden zu wäßrigen Elektrotauchlackbädern weiterverarbeitet.

Die erfindungsgemäßen Elektrotauchlackbäder können z.B. übliche Zusätze wie z.B. Vernetzer, koaleszierende Lösungsmittel, Pigmente, oberflächenaktive Mittel, Vernetzungskatalysatoren, Antioxydantien, Füllstoffe, Antischaummittel usw. enthalten.

Die mit der Erfindung erzielbaren Vorteile liegen darin, daß nach einem technisch sehr einfach durchzuführenden Verfahren Elektrotauchlackbäder des oben beschriebenen Typs bereitgestellt werden können, die gegenüber vergleichbaren, nicht nach dem erfindungsgemäßen Verfahren hergestellten Tauchlackbädern eine geringere Chloridionenkonzentration und damit auch eine geringere Korrosivität aufweisen.

Die Erfindung wird in den folgenden Beispielen näher erläutert. Alle Angaben über Teile und Prozentsätze sind Gewichtsangaben, falls nicht ausdrücklich etwa anderes festgestellt wird.

Beispiel 1

Herstellung eines Bindemittels gemäß DE-PS-3108073, Beispiel 2.

In einem Reaktionsgefäß werden 1093 Teile Araldit GY 2600 (Epoxidäquivalentgewicht EEW - 188, Epoxidharz auf Basis von Bisphenol A der Ciba-Geigy), 151 Teile Neopentylglykol und 4,9 Teile Dimethylbenzylamin vorgelegt. Die Temperatur wird auf 131 °C angehoben und gehalten, bis ein EEW von 415 erreicht ist. Danach gibt man 398 Teile Capa 200 (s. Beispiel 4) und weitere 3,8 Teile Dimethylbenzylamin zu. Man hält die Temperatur bei 131 °C, bis ein EEW von 1030 erriecht ist. Danach fügt man 1274 Teile des Vernetzers (s. Beispiel 4) und 112 Teile des ebenfalls in Beispiel 4 erwähnten Diketimins sowie 86 Teile N-Methylethanolamin zu und hält die Temperatur für 1 Stunde bei 112 °C. Dann mischt man 135 Teile Phenoxypropanol und 40 Teile Methoxypropanol zu und mischt 15 Minuten unter. Diese Harzlösung wird in 3247 Teilen Wasser, 23,5 Teilen Eisessig und 21 Teilen Emulgatorgemisch (s. Beispiel 4) dispergiert.

Anschließend entfernt man in Vakuum die niedersiedenden Lösemittel und stellt einen Festkörper von 35 % ein.

Der argentometrisch bestimmte Chloridgehalt dieser Dispersion liegt bei 127 ppm Chlorid.

Beispiel 2

Das Beispiel 1 wird wiederholt, jedoch gibt man 45 Minuten vor Erreichen des EEW von 1030 12,5 Teile Salicylsäure zu. Die Reaktion wird danach wie oben beschrieben beendet.

Die argentometrische Chloridbestimmung ergibt für diese Dispersion einen Wert von weniger als 80 ppm Chlorid.

Beispiel 3

Das Beispiel 1 wird wiederholt, jedoch wird zur Katalyse sofort das Salz aus 4,9 Teilen Dimethylbenzylamin und 5,3 Teilen Salicylsäure mit dem Epoxidharz und dem Neopentylglykol vorgelegt. Ebenso wird anstelle der 3,8 Teile Dimethylbenzylamin zur Katalyse des Einbaus von Capa 200 das Salz aus 3,8 Teilen Dimethylbenzylamin und 4,1 Teilen Salicylsäure zugesetzt.

Die argentometrische Chloridbestimmung ergibt für diese Dispersionen einen Wert von weniger als 55 ppm Chlorid.

## Beispiel 4

Herstellung eines Bindemittels gemäß EP 70 550, Beispiel B

| | Einwaage (g) |
|---|---|
| - Epikote 829[1)] | 727,6 |
| - Capa 200[2)] | 268,4 |
| - Xylol | 36,1 |
| - Bisphenol A | 197,8 |
| - Dimethylbenzylamin | 3,8 |
| - Isocyanatvernetzer[3)] | 901,3 |
| - Diketimin aus MIBK und Diethylentriamin 75%ig in MIBK | 73,4 |
| - N-Methylethanolamin | 59,1 |
| - Hexylglykol | 76,5 |
| - Essigsäure | 33,5 |
| - Emulgatorgemisch[4)] | 29,4 |
| - Deionisiertes Wasser | 1793,1 |

1) Epoxidharz der Shell Chemie, Epoxidäquivalent 188

2) Polyesterdiol der Interox Chemical

3) Isocyanatvernetzer auf Basis Toluylendiisocyanat mit Butylglykolverkappung und Umsetzung mit Trimethylolpropan im Verhältnis 3:1, angelöst in einer Mischung aus MIBK und n-Butanol (9:1) zu 70 % Festkörper.

4) Emulgatorgemisch auf Basis von Geigy Amin C (Geigy Industrial Chemicals) 120 Teile, Surfynol 104 (Air Products and Chemicals) 120 Teile, Butylglykol 120 Teile und 221 Teile deionisiertes Wasser mit 19 Teilen Eisessig.

MIBK = Methylisobutylketon

### Herstellvorschrift

Epikote 829, Capa 200 und Xylol werden in einem Reaktionsgefäß vorgelegt und unter $N_2$-Schutzgas auf 210 °C erhitzt. Während einer halben Stunde wird dann Wasser ausgekreist. Danach kühlt man den Ansatz auf 150 °C ab, gibt Bisphenol A und 1,6 Teile Dimethylbenzylamin zu. Man erhitzt dann auf 180 °C und hält diese Temperatur eine halbe Stunde. Danach kühlt man auf 130 °C und gibt die Restmenge Dimethylbenzylamin zu. Danach hält man die Temperatur für 2 1/2 Stunden, gibt dann den Isocyanatvernetzer, das Diketimin und N-Methylethanolamin zu und hält dann die Temperatur für eine halbe Stunde bei 110 °C. Danach fügt man das Hexylglykol zu. Die Reaktionsmischung wird dann in dem deionisierten Wasser, das Eisessig und Emulgatorgemisch enthält, dispergiert. Anschließend wird Vakuum angelegt, um

die leicht flüchtigen organischen Lösemittel zu entfernen. Es wird ein Festkörper von 36 % eingestellt.

In dieser Dispersion wird nun der Chloridgehalt argentometrisch bestimmt. Er liegt bei 63 ppm Chlorid.

Beispiel 5 (Vergleichsbeispiel)

Der Versuch 1 wird wiederholt, jedoch gibt man nun eine halbe Stunde vor Zugabe des Vernetzers 4,8 g Eisessig in die Reaktionsmischung. Anschließend wird wie oben beschrieben weiterverfahren.

Die argentometrische Chloridbestimmung ergibt für diese Dispersion einen Wert von 63 ppm Chlorid.

## Ansprüche

1. Wäßrige Elektrotauchlackbäder für die kathodische Elektrotauchlackierung, die als kathodisch abscheidbare Bindemittel modifizierte Epoxid-Aminaddukte enthalten und hergestellt worden sind, indem
   (1)
   (A) Polyepoxide und
   (B) Verbindungen, die eine oder mehrere, bevorzugt 2, an aromatische und/oder (cyclo)-aliphatische Molekülfragmente gebundene Hydroxylgruppen pro Molekül enthalten,
   in Anwesenheit von aminbasischen Katalysatoren zu epoxidgruppenhaltigen Zwischenprodukten umgesetzt worden sind und
   (2) diese Zwischenprodukte anschließend ggf. mit weiteren üblichen Modifizierungsmitteln und schließlich mit
   (C) primären und/oder sekundären (Poly)aminen bzw. deren Salzen und/oder Salzen von tertiären Aminen
   umgesetzt, die so erhaltenen Reaktionsprodukte ggf. mit Säuren neutralisiert, in einem wäßrigen Medium dispergiert und diese Dispersion nach gut bekannten Methoden zu Elektrotauchlackbädern weiterverarbeitet worden sind,
   dadurch gekennzeichnet, daß
   der die Reaktion zwischen den Komponenten (A) und (B) katalysierende aminbasische Katalysator vor der weiteren Umsetzung der aus den Komponenten (A) und (B) gebildeten Zwischenprodukte mit einer Brönstedsäure, deren bei 20 °C gemessener $pK_s$-Wert der ersten Dissoziationsstufe unter 3,7, bevorzugt unter 3,5 liegt, neutralisiert worden ist.

2. Ein Verfahren zur Herstellung wäßriger Elektrotauchlackbäder für die kathodische Elektrotauchlackierung, bei dem
   (1)
   (A) Polyepoxide und
   (B) Verbindungen, die eine oder mehrere, bevorzugt 2, an aromatische und/oder (cyclo)-aliphatische Molekülfragmente gebundene Hydroxylgruppen pro Molekül enthalten,
   in Anwesenheit von aminbasischen Katalysatoren zu epoxidgruppenhaltigen Zwischenprodukten umgesetzt werden und
   (2) diese Zwischenprodukte anschließend ggf. mit weiteren üblichen Modifizerungsmitteln und schließlich mit
   (C) primären und/oder sekundären (Poly)aminen bzw. deren Salzen und/oder Salzen von tertiären Aminen
   umgesetzt, die so erhaltenen Reaktionsprodukte ggf. mit Säure neutralisiert, in einem wäßrigen Medium dispergiert und diese Dispersion nach gut bekannten Methoden zu Elektrotauchlackbädern weiterverarbeitet werden,
   dadurch gekennzeichnet, daß
   der die Reaktion zwischen den Komponenten (A) und (B) katalysierende aminbasische Katalysator vor der weiteren Umsetzung der aus den Komponenten (A) und (B) gebildeten Zwischenprodukte mit einer Brönstedsäure, deren bei 20 °C gemessener $pK_s$-Wert der ersten Dissoziationsstufe unter 3,7, bevorzugt unter 3,5, liegt, neutralisiert wird.

3. Wäßrige Elektrotauchlackbäder oder Verfahren nach einem der Ansprüche 1 bis 2,
   dadurch gekennzeichnet, daß
   der die Reaktion zwischen den Komponenten (A) und (B) katalysierende aminbasische Katalysator bereits vor der Reaktion der Komponenten (A) und (B) neutralisiert worden ist bzw. wird, d.h. die Umsetzung zwischen den Komponenten (A) und (B) mit einem Salz aus der zur Neutralisation

verwendeten Brönstedsäure und dem aminbasischen Katalysator katalysiert worden ist bzw. wird.

4. Wäßrige Elektrotauchlackbäder oder Verfahren nach einem der Ansprüche 1 bis 3 ,
dadurch gekennzeichnet, daß
die zur Neutralisierung des die Umsetzung zwischen den Komponenten (A) und (B) katalysierenden aminbasischen Katalysators verwendete Brönstedsäure einen bei 20 °C gemessenen $pK_s$-Wert aufweist, der unter 3,1 liegt.

5. Wäßrige Elektrotauchlackbäder oder Verfahren nach Anspruch 4,
dadurch gekennzeichnet, daß
als Säure zur Neutralisierung des die Umsetzung zwischen den Komponenten (A) und (B) katalysierenden aminbasischen Katalysators Salicylsäure verwendet wird.

**Claims**

1. An aqueous electrocoating bath for cathodic paint deposition which contains, as cathodically depositable binders, modified epoxide-amine adducts and is prepared by reacting, in the presence of basic amine catalysts,
(1)
(A) polyepoxides with
(B) compounds which contain, per molecule, one or more, preferably 2, hydroxyl groups bonded to aromatic and/or (cyclo)aliphatic molecular fragments,
to form epoxide group-containing intermediates, and
(2) by subsequently reacting these intermediates, if appropriate, with further conventional modifiers and finally with
(C) primary and/or secondary (poly)amines or their salts and/or salts of tertiary amines,
the resultant reaction products being neutralized with acids, if appropriate, dispersed in an aqueous medium and these dispersions further processed by well-known methods to form electrocoating baths,
wherein the basic amine catalyst which catalyzes the reaction between the components (A) and (B) is neutralized, prior to further reaction of the intermediates formed from the components (A) and (B), with a Brönsted acid having a $pK_s$ value of the first stage of dissociation, measured at 20 °C, below 3.7, preferably below 3.5.

2. A process for the preparation of aqueous electrocoating baths for cathodic paint deposition, in which
(1)
(A) polyepoxides are reacted, in the presence of basic amine catalysts, with
(B) compounds which contain, per molecule, one or more, preferably 2, hydroxyl groups bonded to aromatic and/or (cyclo)aliphatic molecular fragments,
to form epoxide group-containing intermediates and
(2) these intermediates are subsequently reacted, if appropriate, with further conventional modifiers and finally with
(C) primary and/or secondary (poly)amines or their salts and/or salts of tertiary amines,
the resulting reaction products are neutralized with acids if appropriate, dispersed in an aqueous medium and these dispersion (sic) are further processed by well-known methods to form electrocoating baths,
wherein the basic amine catalyst which catalyzes the reaction between the components (A) and (B) is neutralized, prior to further reaction of the intermediates formed from the components (A) and (B), with a Brönsted acid having a $pK_s$ value of the first stage of dissociation, measured at 20 °C, below 3.7, preferably below 3.5.

3. An aqueous electrocoating bath or a process as claimed in claims 1 or 2,
wherein the basic amine catalyst which catalyzes the reaction between the components (A) and (B) has been or is neutralized prior to the reaction between the components (A) and (B), i.e. the reaction between the components (A) and (B) has been or is catalyzed by a salt formed from the Brönsted acid used for the neutralization and the basic amine catalyst.

4. An aqueous electrocoating bath or process as claimed in claims 1 to 3,

wherein the Brönsted acid used for the neutralization of the basic amine catalyst which catalyzes the reaction between the components (A) and (B) has a $pK_s$ value, measured at 20° C, which is less than 3.1.

5. An aqueous electrocoating bath or process as claimed in claim 4, wherein salicylic acid is used as the acid for the neutralization of the basic amine catalyst which catalyzes the reaction between the components (A) and (B).

**Revendications**

1. Bains aqueux de laques d'électrodéposition pour le laquage par électrodéposition cathodique, qui contiennent, comme liants pouvant être déposés à la cathode, des produits d'addition époxyde-amine modifiés et qui ont été obtenus
   (1) en faisant réagir
      (A) des polyépoxydes et
      (B) des composés, qui contiennent, par molécule, un ou plusieurs, de préférence 2, groupes hydroxyle liés à des fragments de molécules aromatiques et/ou (cyclo)aliphatiques,
   en présence de catalyseurs amino-basiques, pour obtenir des produits intermédiaires à teneur en groupes époxyde, et
   (2) en faisant réagir ensuite ces produits intermédiaires le cas échéant avec d'autres agents modificateurs usuels et, en définitive, avec
      (C) des (poly)amines primaires et/ou secondaires, ou leurs sels et/ou sels d'amines tertiaires
   en neutralisant les produits de réaction ainsi obtenus le cas échéant, par des acides, en les dispersant dans un milieu aqueux et en transformant cette dispersion, selon des procédés bien connus, en bains de laques d' électrodéposition,
   caractérisés par le fait que
   le catalyseur amino-basique catalysant la réaction entre les composants (A) et (B) a été neutralisé, avant la réaction ultérieure des produits intermédiaires formés à partir des composants (A) et (B), par un acide de Brönsted, dont la valeur du $pK_s$, mesurée a 20° C, de la première étape de dissociation, se situe au-dessous de 3,7, de préférence, au-dessous de 3,5.

2. Procédé de fabrication de bains aqueux de laques d'électrodéposition pour le laquage par électrodépositon cathodique, suivant lequel :
   (1) on fait réagir
      (A) des polyépoxydes et
      (B) des composés, qui contiennent, par molécule, un ou plusieurs, de préférence 2, groupes hydroxyle liés à des fragments de molécules aromatiques et/ou (cyclo)aliphatiques,
   en présence de catalyseurs amino-basiques, pour obtenir des produits intermédiaires à teneur en groupes époxyde et
   (2) on fait réagir ensuite ces produits intermédiaires le cas échéant avec d'autres agents modificateurs usuels et, en définitive, avec
      (C) des (poly)amines primaires et/ou secondaires, ou leurs sels et/ou sels d'amines tertiaires,
   on neutralise les produits de réaction ainsi obtenus le cas échéant par un acide, on les disperse dans un milieu aqueux, et on transforme cette dispersion, selon des procédés bien connus, en bains de laquage d'électrodéposition,
   caractérisé par le fait que
   l'on neutralise le catalyseur amino-basique catalysant la réaction entre les composants (A) et (B), avant la réaction ultérieure des produits intermédiaires formés à partir des composants (A) et (B), par un acide de Brönsted, dont la valeur du $pK_s$, mesurée à 20° C, de la première étape de dissociation se situe au-dessous de 3,7, de préférence, au-dessous de 3,5.

3. Bains aqueux de laques d'électrodéposition ou procédé selon l'une des revendications 1 et 2, caractérisé(s) par le fait que
   le catalyseur amino-basique catalysant la réaction entre les composants (A) et (B) a été, ou est, déjà neutralisé avant la réaction des composants (A) et (B), c'est-à-dire que la réaction entre les composants (A) et (B) a été, ou est, catalysée par un sel de l'acide de Brönsted utilisé pour la neutralisation et du catalyseur amino-basique.

4. Bains aqueux de laques d'électrodéposition ou procédé selon l'une des revendications 1 à 3, caractérisé(s) par le fait que l'acide de Brönsted utilisé pour la neutralisation du catalyseur amino-basique catalysant la réaction entre les composants (A) et (B) présente une valeur de $pK_s$, mesurée à 20° C, qui est inférieure à 3,1.

5. Bains aqueux de laques d'électrodéposition ou procédé selon la revendication 4, caractérisé(s) par le fait que l'acide salicylique est utilisé comme acide pour la neutralisation du catalyseur amino-basique catalysant la réaction entre les composants (A) et (B).